# EUROPEAN PATENT APPLICATION

(11) **EP 4 303 679 A1**
(43) Date of publication of application: **10.01.2024**
(21) Application number: 22182825.4
(22) Date of filing: 04.07.2022
(51) Int. Cl.: G05B 23/02

(54) **A SYSTEM FOR REVIEWING AN ABNORMAL OPERATING STATE OF AN EQUIPMENT OR AN APPARATUS**

(71) Applicant: Softcen Co., Ltd., Seoul (KR)
(72) Inventor: Lee, Jae Seong, Gyeonggi-do (KR); Jang, Yong Han, Gyeonggi-do (KR)
(74) Representative: Banse & Steglich Patentanwälte PartmbB

(57) **Abstract**

The present invention relates to a system for reviewing an abnormal operating state of an equipment or an apparatus. The system comprises an image obtaining module 11 for obtaining a continuous image related to a predetermined monitoring area of an apparatus or an equipment, or a predetermined monitoring object; an abnormal state detecting module 12 for detecting an abnormal state from the obtained image; an image separating/converting module 13 for separating an image detected by the abnormal state detecting module 12 and converting the detected image into a digital image; a displaying module 14 for displaying a detecting information on the converted image; and an analyzing/storing module 15 for analyzing the separated and displayed image by reviewing and storing the analyzed image.

## Description

### BACKGROUND OF THE INVENTION

### 1. Field of the Invention

The present invention relates to a system for reviewing an abnormal operating state of an equipment or an apparatus, in particular the system for analyzing a continuous image obtained by an image obtaining means such an internet protocol camera and reviewing the abnormal operating stage occurring at the apparatus or the equipment.

### 2. Description of the Related Art

An equipment or an apparatus for manufacturing or inspecting may comprise various mechanical or electrical parts and may perform some function in a predetermined way. If the apparatus or the equipment is out of order, a suitable measurement may be done for recovering the function in order that the apparatus or equipment operate in a proper way. An error or malfunction of the apparatus or equipment may be generated in various forms. An error or malfunction occurring intermittently in non-periodical pattern may be hardly found unless the apparatus or the equipment is monitored continuously. Therefore, it is necessary for some means monitoring the apparatus and equipment continuously to be made. There are many known skills in this art for monitoring an operating state of the apparatus and equipment. Korean patent registration number 10-1464344 discloses a method for detecting an abnormal state through a normal state learning of a surveillance image, a surveillance camera applying the same and a method for managing an image. Korean patent publication number 10-2017-0010730 discloses a non-destructive visual inspection method of a generating machines such as a gas turbine engine. The abnormal state occurring intermittently in the apparatus or equipment such as a mechanical apparatus, an inspecting apparatus or the like may be hardly found in general, and it is unclear whether such abnormal state occurs or not because some abnormal state may be generated in a very short time. But if such error or malfunction is continued in a long term and a process or an inspection is performed in such abnormal state, then a defective product may be made, an inspecting error may occur or a process error may be generated. Therefore, such intermittent or non-periodical abnormal state need to be monitored continuously for taking appropriate measure on occurring. But the known skills don't disclose such a system or method. The present invention has a purpose below for overcome the above-mentioned problem.

### PURPOSE OF THE INVENTION

An object of the present invention is to provide with a system for reviewing an abnormal operating state of an equipment or an apparatus, in which an image related to an operating part of an apparatus or an equipment is obtained continuously for detecting various abnormal states to be generated on operating, and an image corresponding to an abnormal state or a malfunction may be separated for reviewing and analyzing.

### SUMMARY OF THE INVENTION

According to one embodiment of the present invention, a system for reviewing an abnormal operating state of an equipment or an apparatus comprises an image obtaining module for obtaining a continuous image related to a predetermined monitoring area of an apparatus or an equipment, or a predetermined monitoring object; an abnormal state detecting module for detecting an abnormal state from the obtained image; an image separating/converting module for separating an image detected by the abnormal state detecting module and converting the detected image into a digital image; a displaying module for displaying a detecting information on the converted image; and an analyzing/storing module for analyzing the separated and displayed image by reviewing and storing the analyzed image.

According to other embodiment of the present invention, the image obtaining module comprises an internet protocol camera.

According to another embodiment of the present invention, the system comprises an outer computer transmitting module for transmitting the separated image separated by the separating/displaying module to the outer computer.

According to still another embodiment of the present invention, the monitoring area becomes an inputting part for inputting a product, an inspecting part for inspecting the product or a discharging part for exiting the product.

According to present invention, the monitoring object becomes a product moving along a predetermined moving line.

According to present invention, the abnormal state becomes an error or a malfunction occurring in an intermittent or non-periodical way.

### BRIEF DESCRIPTION OF THE DRAWINGS

FIG.1 shows an exemplary embodiment of a system for reviewing an abnormal operating condition of an equipment or an apparatus according to present invention.
FIG.2 shows an exemplary embodiment of an internet protocol camera applying to the present invention.
FIG.3 show an exemplary embodiment of a system operating structure according to the present invention.
FIG.4 shows an exemplary embodiment of a method for reviewing an abnormal state of an apparatus or an equipment according to present invention.

### DETAILED DESCRIPTION OF EXEMPLARY EMBODIMENTS

Exemplary embodiments of the present invention will be described herein below with reference to the accompanying drawings.

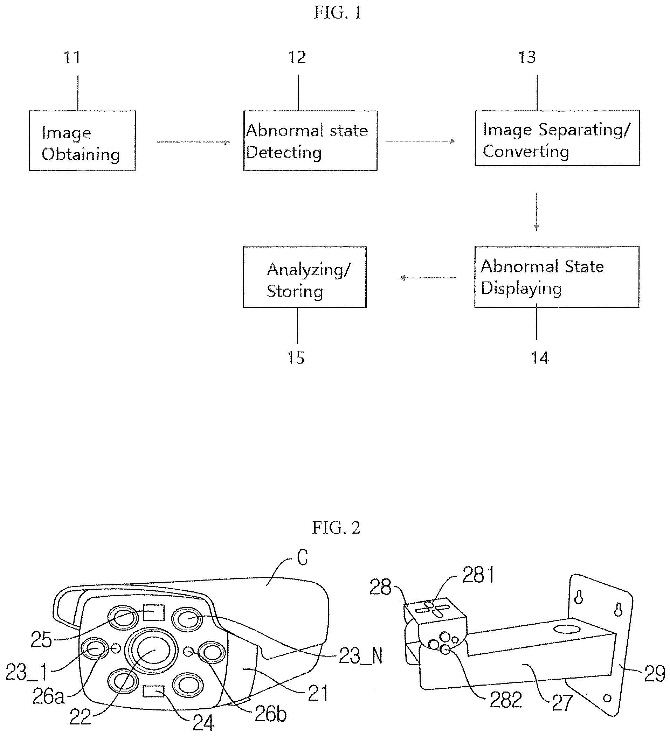

FIG.1 shows an exemplary embodiment of a system for reviewing an abnormal operating condition of an equipment or an apparatus according to present invention.

Referring to FIG.1, a system for reviewing an abnormal operating condition of an equipment or an apparatus comprises an image obtaining module 11 for obtaining a continuous image related to a predetermined monitoring area of an apparatus or an equipment, or a predetermined monitoring object; an abnormal state detecting module 12 for detecting an abnormal state from the obtained image; an image separating/converting module 13 for separating an image detected by the abnormal state detecting module 12 and converting the detected image into a digital image; a displaying module 14 for displaying a detecting information on the converted image; and an analyzing/storing module 15 for analyzing the separated and displayed image by reviewing and storing the analyzed image. The image obtaining module 11 may be installed at a predetermined monitoring area, and the monitoring area may become an operating portion of the apparatus of the equipment. For example, the apparatus or the equipment may be an x-ray inspecting apparatus for inspecting many products transferred continuously along a line. And in the x-ray apparatus, an inputting area for inputting part for inputting the products, an inspecting area for inspecting the products or a discharging area for exiting the products may become the monitoring area. A monitoring object may be determined in the monitoring area, and the monitoring object may become a portion of the apparatus, the equipment or the products. If the monitoring object is determined, a monitoring condition may be set. The monitoring condition may comprise a focus position, a monitoring peripheral line, a brightness or the like, When the monitoring area and the monitoring condition are determined, at least one image obtaining module 11 may be installed. The image obtaining module 11 may become a camera such as an internet protocol camera. A continuous image may be obtained by the image obtaining module 11, and an abnormal state may be detected from the obtained image by the abnormal state detecting module 12. The abnormal state detecting module 12 may have a function to check an occurrence of the abnormal state from the obtained image. For example, the abnormal state detecting module 12 may have a reference image and the abnormal state detecting module 12 may judge the occurrence of the abnormal state by comparing the obtained image with the reference image. And also, the abnormal state detecting module 12 may have function to detect a portion corresponding to the abnormal state from the obtained image. The abnormal state detecting module 12 may check a part corresponding to the abnormal state from the obtained image in real time, and the abnormal state detecting module 12 may determine the abnormal state part in various ways, not limited to. If an abnormal state part exists in the obtained image, the corresponding part may be separated from the obtained image by the image separating/converting module 13, and then the separated image may be converted into a digital image. The separation may be performed by capturing the corresponding part, for example. And an abnormal information may be integrated with the image converted into the digital image by the abnormal state displaying module 14. The abnormal state information may comprise a kind of the abnormal state, an occurring time, an occurring position or the like. When the abnormal state information is displayed at the separated image, the separated image is transmitted to the analyzing/storing module 15 that is comprised in a personal computer. The abnormal state displaying module 14 may communicate with the analyzing/storing module 15 via a near field communication such as a Yi-Fi communication, blue tooth communication or the like. The abnormal state displaying module 14 can transmit the separated image integrated with the information to the analyzing/storing module 15 via the near field communication. The analyzing/storing module 15 may check the abnormal state from the transmitted image after reviewing. And then, the transmitted image, the related information and the analyzing result can be stored. The analyzing/storing module 15 may be installed at a place separated from the image obtained module 11, the abnormal state detecting module 12, the image separating/converting module 13 and the abnormal displaying module 14, and the analyzing/storing module 15 may become any electric device with analyzing and storing function, not limited to.

FIG.2 shows an exemplary embodiment of an internet protocol camera applying to the present invention.

Referring to FIG.2, an IP camera module may comprise a camera body 21; a lens unit 22 formed at camera body 21; a plurality of lighting elements 23_1 to 23 N arranged around the lens unit 22; and a cover 26. Various parts or elements for generating image may be arranged within the camera body 21, and the image may be generated by the light incoming through the lens unit 22. The IP camera module may be placed within an apparatus or equipment, hence the brightness requiring for obtaining an image may be insufficient. Therefore, at least one lighting element 23_1 to 23_N may be arranged around the lens unit 22 for making proper brightness to obtain the image. The illuminating level of the least one lighting element 23_1 to 23_N may be controlled, and a photo resistor may be installed for making a suitable lighting environment. A controlling means may be installed with the camera body 21, and the controlling means may regulate the illuminating level of the lighting element 23_1 to 23_N based on an information received from the photo resistor. A circumstance sensing module 25 may be installed at a front side or at a suitable position, and a circumstance information such as a temperature, a humidity or the like may be obtained and be transmitted to the abnormal state displaying module. The camera body 21 may be protected by the cover 26, and the IP camera module may comprise a near field communicating means. The IP camera module may be secured to a fixing jig for monitoring the monitoring area. The fixing jig may comprise an extending arm 27; a coupling block 28 formed at one end part of the extending arm 27; and a fixing bracket 29 formed at the other end part of the extending arm 27. The fix bracket 29 may have a structure to be secured to an apparatus, an equipment or a construction, and the extending arm 27 may extend for forming a focus of the IP camera on the monitoring area. Selectively, a length of the extending arm 27 may be changed in various ways. The camera body 21 may be coupled to the coupling block 28, and a fixing hole 281 with a plus shape may be formed at the coupling block 28. A securing wing for being inserted into the fixing hole 281 may be formed at the coupling block 28. The fixing jig may have various structures, for example, a tilting angle of the fixing jig may be regulated. The camera body 21 may be coupled to the coupling block 28 with a fixing means 282 such as a bolt, screw or pin. The focus of the IP camera module can be deviated from the predetermined position over time owing to various cause. And hence, it may be difficult for the image of the monitoring area to be obtained. A position determining unit 26a, 26b may be arranged at both sides of the lens unit 22 for checking the deviation of the focus. The position determining unit 26a, 26b may have a function to check whether the focus of the camera is directed to the predetermined position. The position determining unit 26a, 26b may become, for example, an accelerometer, a gyro sensor or an optical sensor, but not limited to. When the focus of the camera has been deviated from the predetermined range, the focus can be adjusted automatically or the deviation of the focus may be informed of a managing module for fixing the deviation of the focus. The position change of the camera focus may be detected in various ways, not limited to. And also, the fixing jig may have various structures, and for example, the tilting angle of the camera may be regulated. The IP camera module may be secured to the fixing jig that has various structures, not limited to.

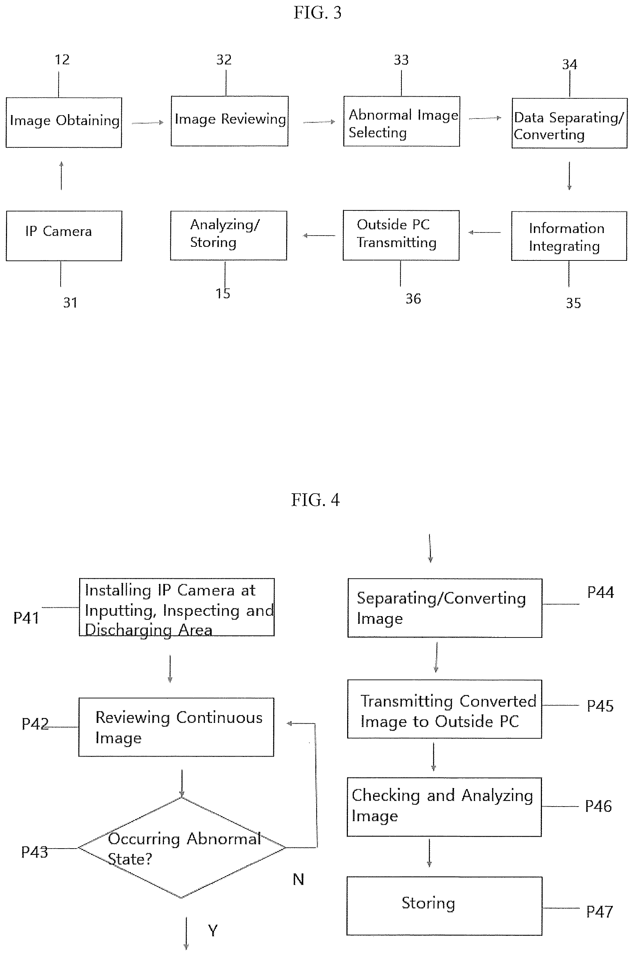

FIG.3 show an exemplary embodiment of a system operating structure according to the present invention.

The monitoring image related to the monitoring area may be obtained by a IP camera 31, and the monitoring condition may be set previously. The image obtained by the IP camera 31 may be reviewed by an image reviewing module 32. If an abnormal state image is detected in course of reviewing by the image reviewing module 32, the corresponding image may be selected by an abnormal image selecting module 33. And the abnormal image may be signed. The image signed as abnormal may be separated by a data separating/converting module 34 to be converted into a digital image. And then, a monitoring information may be integrated with the separated image by an information integrating module 35. The monitoring information may comprise an image obtaining time, a temperature, a humidity, a kind of abnormal state, an image obtaining position or the like. The image data integrated with the monitoring information may be transmitted to a personal computer that is placed outside an apparatus or an equipment via a near field communicating means by an outer PC transmitting module 36. The analyzing/storing module 15 may be installed at the outside personal computer, and the transmitted digital data may be analyzed and stored by the analyzing/storing module.

FIG.4 shows an exemplary embodiment of a method for reviewing an abnormal state of an apparatus or an equipment according to present invention.

Referring to FIG.4, a method for reviewing an abnormal state of an apparatus or an equipment comprises installing at least one internet protocol camera at an inputting area, an inspecting area and a discharging area P41; obtaining an image continuously and in real time by the least one internet protocol camera and reviewing the obtained image P42; checking whether an abnormal state occurs or not P44; separating an image related to the abnormal state and converting the abnormal state image into a digital image P45; transmitting the converted image to an outside personal computer via near field communicating means P45; and verifying the transmitted image and analyzing the verified in the outside personal computer P46.

The equipment or the apparatus may be various inspecting apparatus, and for example, the equipment or the apparatus may be an x-ray inspecting apparatus for inspecting a product such as an electric product, a battery, a food or the like continuously and in real time. The x-ray inspecting apparatus may comprise an inputting area for supplying the product continuously; an inspecting area having an enclosed structure; and a discharging area for exiting a product for which the inspection is completed. The least one internet camera may be installed at each area P41, and the monitoring image may be obtained continuously and in real time. Each continuous image may be reviewed P42, and according to the reviewing result it is determined whether the abnormal state occur or not P43. If no abnormal state occurs NO, then the reviewing may be performed continuously P42. Otherwise, if the abnormal state occurs YES, the related image may be separated and converted into the digital image P44. As mentioned above, the monitoring information may be integrated with the digital image. The converted image may be transmitted to the outside computer via the near field communicating means P45, and the image may be checked in the outside computer for verifying the abnormal state and also, the kind of the abnormal state or the cause of the abnormal state may be analyzed P46. Then the verified image and the analyzing result may be stored P47. The abnormal state to be detected may occurs mainly intermittently or non-periodically. The abnormal state may comprise various kinds of errors and malfunctions and may occur at the apparatus or equipment itself or at the product. Like this, the abnormal state to be detected may comprise various kinds of errors or malfunctions occurring in course of operating, not limited to.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A system for reviewing an abnormal operating condition of an equipment or an apparatus, comprising:
an image obtaining module 11 for obtaining a continuous image related to a predetermined monitoring area of an apparatus or an equipment, or a predetermined monitoring object;
an abnormal state detecting module 12 for detecting an abnormal state from the obtained image;
an image separating/converting module 13 for separating an image detected by the abnormal state detecting module 12 and converting the detected image into a digital image;
a displaying module 14 for displaying a detecting information on the converted image; and
an analyzing/storing module 15 for analyzing the separated and displayed image by reviewing and storing the analyzed image.

2. The system according to claim 1, wherein the image obtaining module 11 comprises an internet protocol camera.

3. The system according to claim 1, the system comprises an outer computer transmitting module 36 for transmitting the separated image separated by the separating/displaying module 14 to the outer computer.

4. The system according to claim 1, the monitoring area becomes an inputting part for inputting a product, an inspecting part for inspecting the product or a discharging part for exiting the product.

5. The system according to claim 1, the monitoring object becomes a product moving along a predetermined moving line.

6. The system according to claim 1, the abnormal state becomes an error or a malfunction occurring in an intermittent or non-periodical way.
